# EUROPEAN PATENT SPECIFICATION

(11) **EP 4 215 686 B1**
(45) Date of publication and mention of the grant of the patent: **09.10.2024**
(21) Application number: 22153017.3
(22) Date of filing: 24.01.2022
(51) Int. Cl.: E04D 13/08

(54) **LIQUID FLOW DIVERTER**
FLÜSSIGKEITSFLUSSUMLEITER
DÉRIVATION DE DÉBIT DE LIQUIDE

(43) Date of publication of application: 26.07.2023
(73) Proprietor: HUSQVARNA AB, 561 82 Huskvarna (SE)
(72) Inventor: Maag, Markus, 89081 Ulm (DE)
(74) Representative: Finkele, Rolf

(56) References cited:
- WO-A1-2023/072459
- DE-A1- 102012 022 586
- DE-A1- 102013 017 979
- US-A1- 2011 315 610

## Description

### TECHNICAL FIELD

The present disclosure relates to a liquid flow diverter which may allow collection of a liquid from a drainage pipe or a downpipe. More specifically, the present disclosure relates to an easy, convenient, and safe retrofitting of the liquid flow diverter with the drainage pipe or the downpipe.

### BACKGROUND

A liquid flow diverter may be used to collect a liquid (say rainwater) from a drainage pipe or a downpipe. The drainage pipe or the downpipe have generally applications with a building, gardens, and other similar installations. The liquid flow diverter may collect and communicate the liquid from the downpipe with a liquid reservoir (say a liquid storage tank). Such a liquid flow diverter may include a collection unit and a liquid outlet. The collection unit of the liquid flow diverter may be readily and removably inserted in any downpipe via a drill hole drilled through a wall of the downpipe.

An example of such a liquid flow diverter is provided by the German patent 10-2013-017-979 (hereinafter referred to as '979 reference). The '979 reference provides a water collection device for collecting water, in particular rainwater, in a downpipe. The water collection device includes a collection unit. The collection unit includes a collection groove made of an elastically deformable material that resets and which may be inserted into the downspout via a lateral insertion opening. The collection unit further includes a drainage socket with a drainage channel. The drainage socket may be connected to the collection groove and may be fixable on the downspout in the region of the insertion opening and via which collected water may drain out of the downspout. However, there is still a need for an apparatus or a method for easy, convenient, efficient, and safe retrofitting of the liquid flow diverter with the downpipe. The apparatus or the method may be such that the direct contact of the user with the sharp drill hole while inserting the collection unit of the liquid flow diverter in the downpipe may be substantially or completely prevented.

A further example of a device for catching and branching-off rainwater from a downpipe is disclosed in the US patent application US 2011/0315610 A1 (hereinafter referred to as `610 reference). The device includes a tensioning system for mounting and fixing a plug-in branch pipe at the downpipe. The tensioning system comprises a spigot nut, from which the plug-in branch pipe projects. In the course of the plug-in branch pipe a filter and/or metering device is optionally arranged from which a discharge piece projects. The optionally filter and/or metering device comprises a filter and/or metering pot incorporated into the plug-in branch pipe and a removable and/or at least rotational lid. The plug-in branch pipe with a sickle-shaped catching blade ahead projects into the downpipe. The plug-in branch pipe is fluid coupled to the downpipe via the spigot nut and a sleeve comprising engagement hooks. Hence, the '610 reference discloses the sickle-shaped catching blade which is fluidically and unmovably connected to the plug-in branch pipe which is in turn unmovably connected with the discharge piece via the optionally filter and/or metering device. Additionally, the plug-in branch pipe is unmovably connected respectively fluid coupled to the downpipe via the tensioning system. Therefore, the '610 reference discloses that the catching blade is fluid coupled to the downpipe by the plug-in branch pipe which in turn is non-movable relative to the catching blade.

However, in contrast to the present invention, the '610 reference does not disclose that the liquid outlet allows fluid coupling of the liquid flow diverter with the downpipe, wherein the liquid outlet is slidably coupled with the first end of the body, such that the liquid outlet is slidable relative to the first end of the body between a first position and a second position. Therefore, there is still a need for a apparatus or a method for easy, convenient, efficient and safe retrofitting of the liquid flow diverter with the downpipe. The apparatus or the method may be such that the direct contact of the user with the sharp drillhole while inserting the collection unit of the liquid flow diverter in the downpipe may be substantially or completely prevented.

WO 2023/072459 A1 discloses a fluid flow diverter according to Art. 54(3) EPC.

### SUMMARY

In view of the above, it is an objective of the present invention to solve or at least reduce the drawbacks discussed above. The objective is at least partially achieved by a liquid flow diverter for a downpipe. The liquid flow diverter for the downpipe includes a body. The body includes a channel profile between a first end and a second end. The channel profile allows flow of a liquid therein. A liquid outlet is adapted to be coupled with the first end of the body. The liquid outlet allows fluid coupling of the liquid flow diverter with the downpipe. The liquid flow diverter is characterized in that the liquid outlet is slidably coupled with the first end of the body, such that the liquid outlet is slidable relative to the first end of the body between a first position and a second position. The liquid outlet is adapted to be fluidly de-coupled with the first end of the body in the first position. Further, the liquid outlet is adapted to be fluidly coupled with the first end of the body in the second position.

Thus, the present disclosure provides a liquid flow diverter that is fluidly coupled with a downpipe via a liquid outlet. The liquid outlet may further be fluidly coupled with a tap, or a liquid reservoir located even at a remote location, via a hose and the like for various domestic as well as industrial applications. The liquid outlet is slidable with respect to the body of the liquid flow diverter and may be used as a handle to make retrofitting of the liquid flow diverter with the downpipe as an easy, convenient, efficient, and safe process.

According to an embodiment of the present disclosure, in the first position and an intermediatory position of the liquid outlet relative to the first end of the body, an outflow of the liquid from the downpipe is automatically stopped. The liquid collected in the liquid flow diverter may not be accessed if the liquid outlet is not fluidly coupled with the body of the liquid flow diverter. Thus, in cases, where the coupling between the body of the liquid flow diverter and the liquid outlet is affected due to any external factors, the outflow of the liquid from the downpipe is automatically stopped. Thus, problems such as leakage and others may be prevented leading to judicious use of the liquid.

According to an embodiment of the present disclosure, the liquid outlet includes a spout and a plurality of ribs, wherein the plurality of ribs allows to slidably couple the liquid outlet with the first end of the body. The sliding feature of the liquid outlet relative to the first end of the body may allow the liquid outlet to be used as the handle. The liquid outlet may be used to properly retrofit the liquid flow diverter with the downpipe. The liquid outlet may be used to properly position or arrange the body of the liquid flow diverter within a hollow space inside the downpipe such that the body collects maximum possible amount of the liquid for flow in the channel profile.

According to an embodiment of the present disclosure, the plurality of ribs engages with a plurality of protrusions on the first end of the body. The plurality of ribs of the liquid outlet together with the plurality of protrusions on the first end of the body form an irremovable coupling between the body and the liquid outlet. The coupling allows the liquid outlet to slide to the first position and the second position relative to the body. However, the coupling may not be removed completely to separate out the liquid outlet and the body from each other.

According to an embodiment of the present disclosure, the channel profile has a helix shape. The helix shape of the channel profile may allow the liquid therein to flow under the influence of gravity towards the liquid outlet of the liquid flow diverter. Thus, all the liquid collected in the channel profile may easily flow towards the liquid outlet and not stall within the channel profile.

According to an embodiment of the present disclosure, a method for retrofitting the liquid flow diverter with the downpipe includes drilling a hole in the downpipe. The method further includes holding the liquid outlet of the liquid flow diverter such that the liquid outlet is adapted to be coupled with the body of the liquid flow diverter, wherein the body defines the channel profile between the first end and the second end. Furthermore, the method includes inserting the body inside the downpipe via the hole and manipulating an arrangement of the body inside the downpipe with the liquid outlet such that the body captures liquid inside the downpipe. The method is characterized in that the liquid outlet is slidably coupled with the first end of the body, such that the liquid outlet is slidable relative to the first end of the body between the first position and the second position. The liquid outlet is adapted to be fluidly de-coupled with the first end of the body in the first position. Further, the liquid outlet is adapted to be fluidly coupled with the first end of the body in the second position such that the liquid outlet, when in the second position, completes the retrofitting of the liquid flow diverter with the downpipe. The method is easy, convenient and safe to execute. A user may use the liquid outlet as the handle to properly insert the body of the liquid flow diverter inside the downpipe. Thus, the user may not get in direct contact with the sharp drill hole thereby preventing any potential injuries.

According to an embodiment of the present disclosure, the retrofitting arrangement of the liquid flow diverter with the downpipe is additionally secured by a belt. The belt may adapt to the shape of the downpipe and consequently wrap around the downpipe to further strengthen the retrofitting arrangement of the liquid flow diverter with the downpipe.

Other features and aspects of this invention will be apparent from the following description and the accompanying drawings.

### BRIEF DESCRIPTION OF THE DRAWINGS

The invention will be described in more detail with reference to the enclosed drawings, wherein:
FIG. 1 shows a perspective view of a liquid flow diverter with a body not fluidly coupled with a liquid outlet, in accordance with an aspect of the present disclosure;
FIG. 2A shows another perspective view of a liquid flow diverter with the liquid outlet in a first position, in accordance with an aspect of the present disclosure;
FIG. 2B shows a perspective view of a liquid flow diverter with a liquid outlet in a second position, in accordance with an aspect of the present disclosure;
**FIGS. 3A, 3B, 3C** and **3D** show various steps for retrofitting of a liquid flow diverter with a downpipe, in accordance with an aspect of the present disclosure;
**FIG.** 4 shows a flow chart highlighting the steps involved in retrofitting of a liquid flow diverter with a downpipe, in accordance with an aspect of the present disclosure; and
FIG. 5 shows perspective view of a liquid flow diverter and a downpipe assembly secured by a belt, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

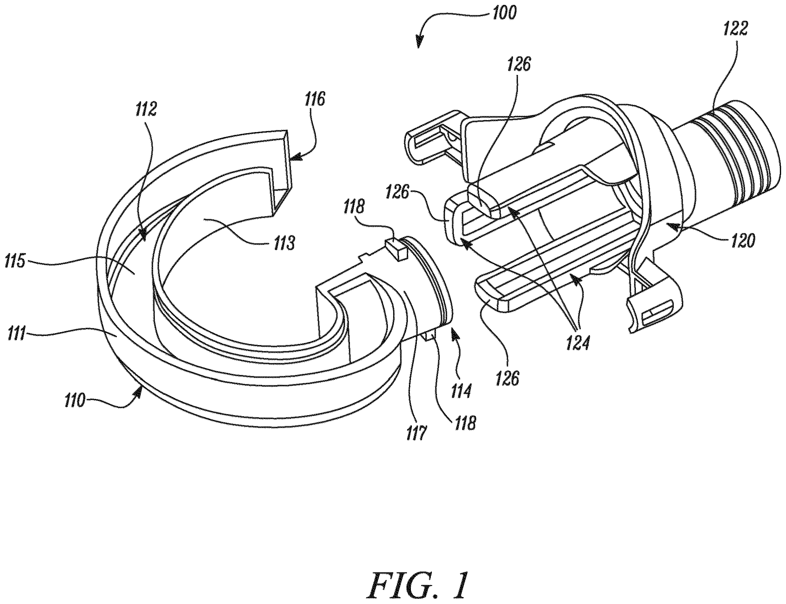

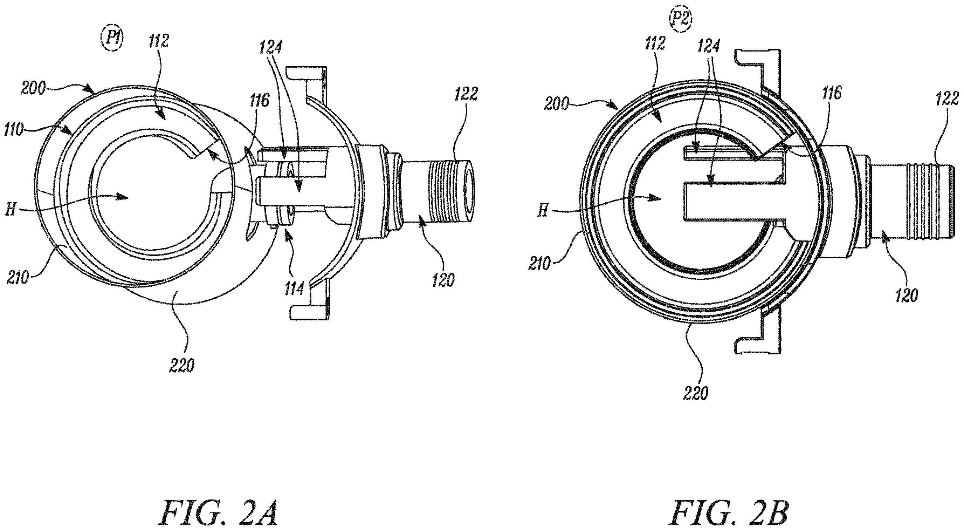

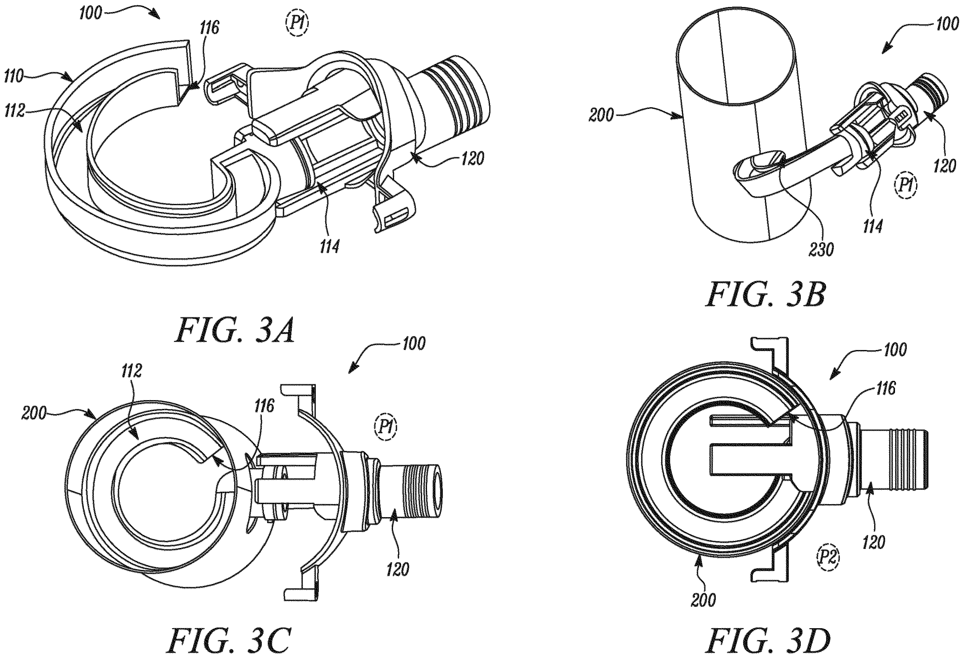

**FIG. 1** illustrates a liquid flow diverter **100** for a downpipe **200** (as shown in **FIGS. 2A, 2B****,** **3B, 3C** and **3D**). The liquid flow diverter **100** may allow collection of a liquid from the downpipe **200** having an inner surface **210** and an outer surface **220.** The collected liquid may be transferred to a liquid reservoir (not shown) directly or via a hose (not shown), where the liquid reservoir may be installed at a far off or a remote location. The liquid collected by the liquid flow diverter **100** may be used for a wide range of applications such as, but not limited to, gardening, cleaning, and the like.

The liquid flow diverter **100** for the downpipe **200** includes a body **110.** The body **110** includes a first end **114,** a channel profile **112** for collecting the liquid and a second end **116.** The first end **114** of the body **110** has a cylindrical shape or profile. However, actual implementation of the present disclosure may have the first end **114** of any shape and size without limiting the scope of the present disclosure in any manner. The body **110** includes the channel profile **112** between the first end **114** and the second end **116.** The channel profile **112** allows flow of the liquid therein. The first end **114** allows the liquid flowing in the liquid channel **112** to flow outside the body **110** of the liquid flow diverter **100.** The channel profile **112** includes a pair of side walls **111, 113** and a bottom surface **115.**

A liquid outlet **120** is adapted to be fluidly coupled with the first end **114** of the body **110.** The channel profile **112** of the present disclosure has a helix shape. However, actual implementation of the present disclosure may include the channel profile **112** of any shape and size as per the application requirement. The helix shape of the channel profile **112** may allow the liquid therein to flow under the influence of gravity towards the liquid outlet **120** of the liquid flow diverter **100.** Thus, all the liquid collected in the channel profile **112** may easily flow towards the liquid outlet **120** and not stall within the channel profile **112.**

In some embodiments, the body **110** may be made from a partly rigid material. In the context of the present disclosure, the partly rigid material refers to a material which may have at least some part of composition as a rigid material. In an embodiment, the partly rigid material may be a rigid material. The rigid material may be one or more of a polymer or a plastic. The polymer or plastic material may provide high strength, toughness, or resilience to the body **110.** The polymer or plastic material may also provide necessary flexibility for proper insertion of the body **110,** particularly the channel profile **112** in the downpipe **200.** The body **110** may preferably be made from a rigid hard plastic. Thus, channel profile **112** may not inadvertently excessively bend in the downpipe **200** during its insertion and may be positioned correctly or properly within the downpipe **200.**

In another embodiment, the partly rigid material may be a semi-rigid material. The semi-rigid material refers to a material which may have at least some part of composition as a flexible material along with having at least some part of composition as a rigid material. The semi-rigid material may showcase functional properties of both a rigid material and a flexible material and may provide a balance between fully rigid material and a fully flexible material. The present disclosure is not limited by any proportions of material composition for the semi-rigid material.

In some embodiments, the body **110** may also include a sealing element such as, but not limited to, an O-ring, a gasket, or any other similar sealing element suitable for usage with various aspects of the present disclosure. The sealing element may be disposed on the side wall **111** of the body **110** such that the sealing element may face and engage with the inner surface **210** of the downpipe **200.** The sealing element may facilitate good and thorough engagement of the body **110** with the downpipe **200.** The sealing element may provide benefits of adapting the channel profile **112** to the shape of the downpipe **200** and improving the ingress of the liquid in the channel profile **112.** In some embodiments, the sealing element may be made from one or more of a polymer or a rubber. In some embodiments, the sealing element may be removably mounted or assembled with the body **110** (or the channel profile **112**) of the liquid flow diverter **100.**

With continued reference to **FIG. 1****,** the liquid outlet **120** is slidably coupled with the first end **114** of the body **110.** The first end **114** further includes an outer surface **117** and an inner surface (not shown). In the illustrated embodiment, the first end **114** further includes a plurality of protrusions **118** on the outer surface **117** of the first end **114.** In some embodiments, the first end **114** may include an annular protrusion (not shown) on the outer surface **117.** In some embodiments, the first end **114** may include spiral threads (not shown) on the outer surface **117.**

In some embodiments, the liquid outlet **120** further includes a spout **122** and a plurality of ribs **124.** The material of the liquid outlet **120** may be same or different to the material of the body **110** as per the application requirement of the present disclosure. The plurality of ribs **124** may allow slidable coupling between the liquid outlet **120** and the first end **114** of the body **110.** Further, the spout **122** may allow access to the liquid collected from the downpipe **200.** The spout **122** may be fluidly coupled to a tap, or other liquid conveying sources known in the art without restricting the scope of the present disclosure in any manner.

The plurality of ribs **124** of the present disclosure are shown as three ribs. However, actual implementation of the present disclosure may include any number of ribs **124** depending on the application requirement of the present disclosure. In some embodiments, the plurality of ribs **124** include a plurality of protrusions **126.** The plurality of protrusions **126** of the present disclosure are formed along the edges of each of the plurality of ribs **124.** The plurality of protrusions **126** of the present disclosure are U-shaped protrusions **126** formed along the edges of each of the plurality of ribs **124.** However, the actual implementation of the disclosure may include the plurality of protrusions **126** of any shape and size without limiting the scope of the present disclosure in any manner.

In some embodiments, the plurality of ribs **124** slidably engage with the plurality of protrusions **118** on the first end **114** of the body **110** to form slidable coupling between the liquid outlet **120** and the first end **114** of the body **110.** The slidable engagement between the plurality of ribs **124** and the plurality of protrusions **118** may be accomplished by the slidable engagement between the plurality of protrusions **126** and the plurality of protrusions **118.** The plurality of protrusions **126** may slide on the outer surface **117** and the plurality of protrusions **118** may act as a sliding stop for the plurality of ribs **124** to prevent decoupling between the first end **114** and the liquid outlet **120.** Thus, the plurality of ribs **124** of the liquid outlet **120** together with the plurality of protrusions **118** form the slidable but irremovable coupling between the body **110** and the liquid outlet **120.** Further, the plurality of protrusions **118** may also prevent rotation of the body **110** in the downpipe **200** when the plurality of ribs **124** of the liquid outlet **120** are slid onto the outer surface **117.** In some embodiments, the plurality of protrusions **126** may engage with the spiral threads or the annular protrusions on the outer surface **117** of the first end **114.**

Further as illustrated in **FIGS. 2A** and **2B****,** the slidable coupling between the liquid outlet **120** and the first end **114** of the body **110** allows the liquid outlet **120** to slide to a first position "P1" and a second position "P2" relative to the body **110.** However, the coupling may not be removed completely to separate out the liquid outlet **120** and the body **110** from each other. The liquid outlet **120** is adapted to be fluidly de-coupled with the first end **114** of the body **110** in the first position "P1". The liquid outlet **120** is adapted to be fluidly coupled with the first end **114** of the body **110** in the second position "P2". Further, the liquid outlet **120** is adapted to be fluidly de-coupled with the first end **114** of the body **110** in an intermediatory position (not shown) such that the intermediatory position is any position of the liquid outlet **120** between the first position "P1" and the second position "P2".

Furthermore, the sliding feature of the liquid outlet **120** relative to the first end **114** of the body **110** may allow the liquid outlet **120** to be used as a handle such that the liquid outlet **120** allows fluid coupling of the liquid flow diverter **100** with the downpipe **200.** The liquid outlet **120** may be used to properly retrofit the liquid flow diverter **100** with the downpipe **200.** The liquid outlet **120** may be used to properly position or arrange the body **110** of the liquid flow diverter **100** within a hollow space "H" inside the downpipe **200** such that the body collects maximum possible amount of the liquid for flow in the channel profile **112.**

In some embodiments, in the first position "P1" and an intermediatory position of the liquid outlet **120** relative to the first end **114** of the body **110,** an outflow of the liquid from the downpipe **200** is automatically stopped. The liquid collected in the liquid flow diverter **100** may not be accessed if the liquid outlet **120** is not fluidly coupled with the body **110** of the liquid flow diverter **100.** The liquid collected in the liquid flow diverter **100** may not be accessed if the liquid outlet **120** is not in the second position "P2". In some embodiments, the first end **114** may include a pivotable shutter (not shown) pivotably biased to close an access to the channel **112.** Further, the liquid outlet may include a rod (not shown) such that in the second position "P2" of the liquid outlet **120,** the rod may strike the pivotable shutter to allow access to the channel **112** via the first end **114.** Likewise, in the first position "P1" and the intermediatory position of the liquid outlet **120,** the rod may not strike the pivotable shutter and the outflow of the liquid from the downpipe **200** is automatically stopped. However, the outflow of the liquid from the downpipe **200** may be automatically stopped in the first position "P1" and the intermediatory position of the liquid outlet **120** by any other suitable means known in the art without restricting the scope of the present disclosure in any manner.

Thus, in cases, where the coupling between the body **110** of the liquid flow diverter **100** and the liquid outlet **120** is affected due to any external factors, the outflow of the liquid from the downpipe **100** is automatically stopped. Thus, problems such as leakage and others may be prevented leading to judicious use of the liquid.

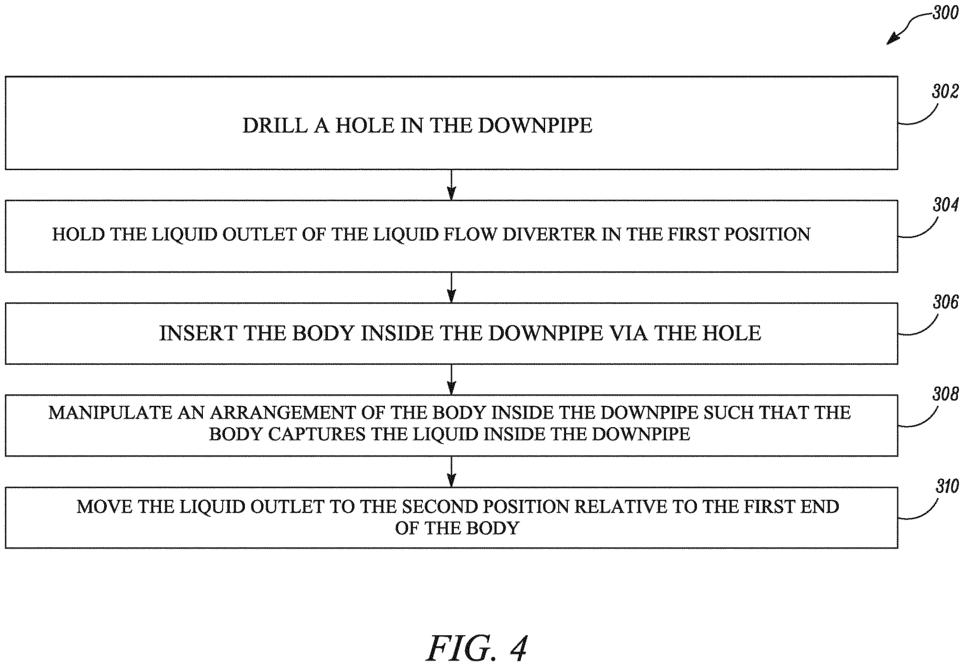

**FIGS. 3A, 3B, 3C, 3D** and **4** together illustrate the various steps of a method **300** for retrofitting of the liquid flow diverter **100** with the downpipe **200.** The method **300** for retrofitting the liquid flow diverter **100** with the downpipe **200** includes a first step **302** of drilling a hole **230** in the downpipe **200.** The hole **230** may be drilled by any suitable process or tools known in the art. The present disclosure is not limited by choice of manner of drilling the hole **230** in any way.

The method **300** further includes a second step **304** in which the liquid outlet **120** of the liquid flow diverter **100** is held by a user such that the liquid outlet **120** is adapted to be coupled with the body **110** of the liquid flow diverter **100.** The body **110** includes the channel profile **112** between the first end **114** and the second end **116** such that the channel profile **112** allows flow of the liquid collected in the downpipe **200.** Further, the liquid outlet **120** is slidably coupled with the first end **114** of the body **110,** such that the liquid outlet **120** is slidable relative to the first end **114** of the body **110** between the first position "P1" and the second position "P2". The liquid outlet **120** is adapted to be fluidly de-coupled with the first end **114** of the body **110** in the first position "P1". Further, the liquid outlet **120** is adapted to be fluidly coupled with the first end **114** of the body **110** in the second position "P2". In the second step **304,** the liquid outlet **120** of the liquid flow diverter **100** is in the first position "P1".

The method **300** further includes a third step **306** in which the liquid outlet **120** is in the first position "P1" relative to the first end **114** of the body **110.** The third step **306** includes insertion of the body **110** inside the downpipe **200** via the hole **230.** Furthermore, the method **300** includes a fourth step **308.** In the fourth step **308,** an arrangement of the body **110** inside the downpipe **200** is manipulated such that the body **110** captures the liquid inside the downpipe **200.** After the fourth step **308,** a fifth step **310** is executed. In the fifth step **310,** the liquid outlet **120** is moved to the second position "P2" relative to the first end **114** of the body **110.** The liquid outlet **120,** when in the second position "P2", completes the retrofitting of the liquid flow diverter **100** with the downpipe **100.** Thus, the liquid outlet **120** aligns with the first end **114** of the body **110** such that the liquid collected in the body **110** may be accessed for use with various industrial and domestic applications. The method **300** is easy, convenient and safe to execute. The user may use the liquid outlet **120** as the handle to properly insert the body **110** of the liquid flow diverter **100** inside the downpipe **200.** Thus, the user may not get in direct contact with the sharp drill hole **230** thereby preventing injuries.

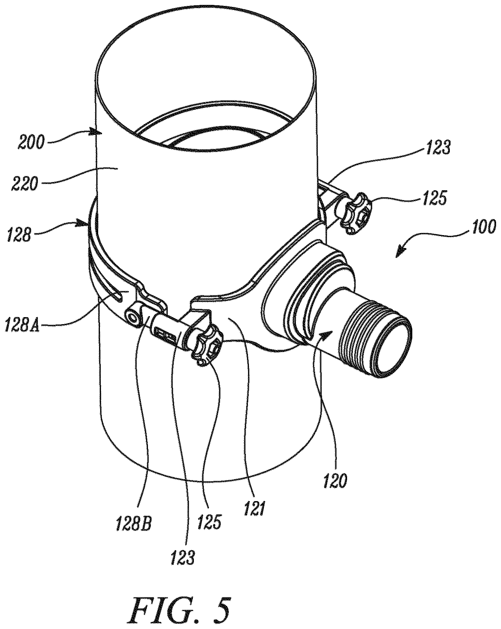

In some embodiments, as shown in **FIG. 5****,** the retrofitting arrangement of the liquid flow diverter **100** with the downpipe **200** is additionally secured by a belt **128.** The belt **128** may be made from any suitable material known in the art without limiting the scope of the present disclosure in any manner. The belt **128** may adapt to the shape of the downpipe **200** and consequently wrap around the outer surface **220** of the downpipe **200** to further strengthen the retrofitting arrangement of the liquid flow diverter **100** with the downpipe **200.**

The belt **128** includes a body portion **128A** that wraps around the downpipe **200.** Further, the belt **128** includes a pair of engaging elements **128B** on each end of the body portion **128A** such that the pair of engaging elements **128B** are fastened to a pair of fingers **123** using a pair of caps **125** after the body portion **128A** is wrapped around the downpipe **200.** The pair of fingers **123** are provided as an extension on both ends of a ring **121,** which is part of the liquid outlet **120.** However, the belt **128** may be fastened or coupled to the liquid outlet **120** by any other means known in the art.

Thus, the present disclosure provides the liquid flow diverter **100** that is fluidly coupled with the downpipe **200** via the liquid outlet **120.** The liquid outlet **120** may further be fluidly coupled with the tap, or the liquid reservoir located even at a remote location, via the hose and the like for various domestic as well as industrial applications. The liquid outlet **120** is slidable with respect to the body **110** of the liquid flow diverter **120** and may be used as the handle to make retrofitting of the liquid flow diverter **100** with the downpipe **200** as an easy, convenient, efficient, and safe process.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Liquid Flow Diverter
- **110**: Body
- **111, 113**: Side Walls
- **112**: Channel Profile
- **114**: First End
- **115**: Bottom Surface
- **116**: Second End
- **117**: Outer Surface
- **118**: Protrusion
- **120**: Liquid Outlet
- **121**: Ring
- **122**: Spout
- **123**: Fingers
- **124**: Ribs
- **125**: Caps
- **126**: Protrusions
- **128**: Belt
- **128A**: Body Portion
- **128B**: Engaging elements
- **200**: Downpipe
- **210**: Inner Surface
- **220**: Outer Surface
- **230**: Hole
- **300**: Method
- **P1**: First Position
- **P2**: Second Position
- **H**: Hollow Space

## Claims

1. A liquid flow diverter **(100)** for a downpipe **(200),** the liquid flow diverter **(100)** comprising:
a body **(110)** defining a channel profile **(112)** between a first end **(114)** and a second end **(116),** wherein the channel profile **(112)** allows flow of a liquid therein; and
a liquid outlet **(120)** adapted to be coupled with the first end **(114)** of the body **(110),** wherein the liquid outlet **(120)** allows fluid coupling of the liquid flow diverter **(100)** with the downpipe **(200);**
the liquid outlet **(120)** is slidably coupled with the first end **(114)** of the body **(110),** such that the liquid outlet **(120)** is slidable relative to the first end **(114)** of the body **(110)** between a first position **(P1)** and a second position **(P2);**
wherein the liquid outlet **(120)** is adapted to be fluidly de-coupled with the first end **(114)** of the body **(110)** in the first position **(P1);** and
wherein the liquid outlet **(120)** is adapted to be fluidly coupled with the first end **(114)** of the body **(110)** in the second position **(P2),**
wherein the liquid outlet **(120)** includes a plurality of ribs **(124),** wherein the plurality of ribs **(124)** allows to slidably couple the liquid outlet **(120)** with the first end **(114)** of the body **(110)** and engages with a plurality of protrusions **(118)** on the first end **(114)** of the body **(110),**
wherein
this engagement forms an irremovable coupling between the body **(110)** and the liquid outlet **(120).**

2. The liquid flow diverter (**100)** of claim **1,** wherein in the first position **(P1)** an outflow of the liquid from the downpipe **(200)** is automatically stopped.

3. The liquid flow diverter **(100)** of any of the preceding claims, wherein in an intermediatory, position the outflow of the liquid from the downpipe **(200)** is automatically stopped, wherein the intermediatory position is any position of the liquid outlet **(120)** between the first position **(P1)** and the second position **(P2).**

4. The liquid flow diverter **(100)** of any of the preceding claims, wherein the liquid outlet **(120)** includes a spout **(122).**

5. The liquid flow diverter **(100)** of any of the preceding claims, wherein the channel profile **(112)** has a helix shape.

6. A method **(300)** for retrofitting a liquid flow diverter **(100)** with a downpipe **(200),** the method **(300)** comprising:
drilling a hole **(230)** in a downpipe **(200);**
holding a liquid outlet **(120)** of the liquid flow diverter **(100)** such that the liquid outlet **(120)** is adapted to be coupled with a body **(110)** of the liquid flow diverter **(100),** wherein the body **(110)** defines a channel profile **(112)** between a first end **(114)** and a second end **(116);**
inserting the body **(110)** inside the downpipe **(200)** via the hole **(230);**
manipulating an arrangement of the body **(110)** inside the downpipe **(200)** with the liquid outlet **(120)** such that the body **(110)** captures liquid inside the downpipe **(200);**
the liquid outlet **(120)** is slidably coupled with the first end **(114)** of the body **(110),** such that the liquid outlet **(120)** is slidable relative to the first end **(114)** of the body **(110)** between a first position **(P1)** and a second position **(P2);**
wherein the liquid outlet **(120)** is adapted to be fluidly de-coupled with the first end **(114)** of the body **(110)** in the first position **(P1);**
wherein the liquid outlet **(120)** is adapted to be fluidly coupled with the first end **(114)** of the body **(110)** in the second position **(P2);** and
wherein the liquid outlet **(120)** when in second position **(P2)** completes the retrofitting of the liquid flow diverter **(100)** with the downpipe **(200),**
wherein the liquid outlet **(120)** includes a plurality of ribs **(124),** wherein the plurality of ribs **(124)** allows to slidably couple the liquid outlet **(120)** with the first end **(114)** of the body **(110)** and engages with a plurality of protrusions **(118)** on the first end **(114)** of the body **(110),**
wherein
this engagement forms an irremovable coupling between the body **(110)** and the liquid outlet **(120).**

7. The method **(300)** of claim 6, wherein the retrofitting arrangement of the liquid flow diverter **(100)** with the downpipe **(200)** is additionally secured by a belt **(128).**

8. The method **(300)** of claim 6 or 7, wherein the liquid outlet **(120)** includes a spout **(122).**

## Patentansprüche

1. Flüssigkeitsströmungsumleiter **(100)** für ein Fallrohr **(200),** der Flüssigkeitsströmungsumleiter **(100)** umfassend:
einen Körper **(110),** der ein Kanalprofil **(112)** zwischen einem ersten Ende **(114)** und einem zweiten Ende **(116)** definiert, wobei das Kanalprofil **(112)** eine Strömung einer Flüssigkeit darin ermöglicht; und
einen Flüssigkeitsauslass **(120),** der angepasst ist, um mit dem ersten Ende **(114)** des Körpers **(110)** gekoppelt zu werden, wobei der Flüssigkeitsauslass **(120)** eine Fluidkopplung des Flüssigkeitsströmungsumleiters **(100)** mit dem Fallrohr **(200)** ermöglicht;
wobei der Flüssigkeitsauslass **(120)** mit dem ersten Ende **(114)** des Körpers **(110)** derart verschiebbar gekoppelt ist, dass der Flüssigkeitsauslass **(120)** relativ zu dem ersten Ende **(114)** des Körpers **(110)** zwischen einer ersten Position **(P1)** und einer zweiten Position **(P2)** verschiebbar ist;
wobei der Flüssigkeitsauslass **(120)** angepasst ist, um von dem ersten Ende **(114)** des Körpers **(110)** in der ersten Position **(P1)** fluidisch entkoppelt zu werden; und
wobei der Flüssigkeitsauslass **(120)** angepasst ist, um mit dem ersten Ende **(114)** des Körpers **(110)** in der zweiten Position **(P2)** fluidisch gekoppelt zu werden,
wobei der Flüssigkeitsauslass **(120)** eine Vielzahl von Rippen **(124)** einschließt, wobei die Vielzahl von Rippen **(124)** es ermöglicht, den Flüssigkeitsauslass **(120)** mit dem ersten Ende **(114)** des Körpers **(110)** verschiebbar zu koppeln, und mit einer Vielzahl von Vorsprüngen **(118)** an dem ersten Ende **(114)** des Körpers **(110)** in Eingriff steht,
wobei
dieser Eingriff eine unlösbare Kopplung zwischen dem Körper **(110)** und dem Flüssigkeitsauslass **(120)** ausbildet.

2. Flüssigkeitsströmungsumleiter **(100)** nach Anspruch **1,** wobei in der ersten Position **(P1)** ein Ausströmen der Flüssigkeit aus dem Fallrohr **(200)** automatisch gestoppt wird.

3. Flüssigkeitsströmungsumleiter **(100)** nach einem der vorstehenden Ansprüche, wobei in einer Zwischenposition das Ausströmen der Flüssigkeit aus dem Fallrohr **(200)** automatisch gestoppt wird, wobei die Zwischenposition eine beliebige Position des Flüssigkeitsauslasses **(120)** zwischen der ersten Position **(P1)** und der zweiten Position **(P2)** ist.

4. Flüssigkeitsströmungsumleiter **(100)** nach einem der vorstehenden Ansprüche, wobei der Flüssigkeitsauslass **(120)** einen Ausguss **(122)** einschließt.

5. Flüssigkeitsströmungsumleiter **(100)** nach einem der vorstehenden Ansprüche, wobei das Kanalprofil **(112)** eine Helixform aufweist.

6. Verfahren **(300)** zum Nachrüsten eines Flüssigkeitsströmungsumleiters **(100)** mit einem Fallrohr **(200),** das Verfahren **(300)** umfassend:
Bohren eines Lochs **(230)** in einem Fallrohr **(200);**
Halten eines Flüssigkeitsauslasses **(120)** des Flüssigkeitsströmungsumleiters **(100)** derart, dass der Flüssigkeitsauslass **(120)** angepasst ist, um mit einem Körper **(110)** des Flüssigkeitsströmungsumleiters **(100)** gekoppelt zu werden, wobei der Körper **(110)** ein Kanalprofil **(112)** zwischen einem ersten Ende **(114)** und einem zweiten Ende **(116)** definiert;
Einsetzen des Körpers **(110)** im Inneren des Fallrohrs **(200)** durch das Loch **(230);**
Manipulieren einer Anordnung des Körpers **(110)** im Inneren des Fallrohrs **(200)** mit dem Flüssigkeitsauslass **(120)** derart, dass der Körper **(110)** Flüssigkeit im Inneren des Fallrohrs **(200)** auffängt;
wobei der Flüssigkeitsauslass **(120)** mit dem ersten Ende **(114)** des Körpers **(110)** derart verschiebbar gekoppelt ist, dass der Flüssigkeitsauslass **(120)** relativ zu dem ersten Ende **(114)** des Körpers **(110)** zwischen einer ersten Position **(P1)** und einer zweiten Position **(P2)** verschiebbar ist;
wobei der Flüssigkeitsauslass **(120)** angepasst ist, um von dem ersten Ende **(114)** des Körpers **(110)** in der ersten Position **(P1)** fluidisch entkoppelt zu werden;
wobei der Flüssigkeitsauslass **(120)** angepasst ist, um mit dem ersten Ende **(114)** des Körpers **(110)** in der zweiten Position **(P2)** fluidisch gekoppelt zu werden; und
wobei der Flüssigkeitsauslass **(120),** wenn er in der zweiten Position **(P2)** ist, das Nachrüsten des Flüssigkeitsströmungsumleiters **(100)** mit dem Fallrohr **(200)** abschließt,
wobei der Flüssigkeitsauslass **(120)** eine Vielzahl von Rippen **(124)** einschließt, wobei die Vielzahl von Rippen **(124)** es ermöglicht, den Flüssigkeitsauslass **(120)** mit dem ersten Ende **(114)** des Körpers **(110)** verschiebbar zu koppeln, und mit einer Vielzahl von Vorsprüngen **(118)** an dem ersten Ende **(114)** des Körpers **(110)** in Eingriff steht,
wobei
dieser Eingriff eine unlösbare Kopplung zwischen dem Körper **(110)** und dem Flüssigkeitsauslass **(120)** ausbildet.

7. Verfahren **(300)** nach Anspruch 6, wobei die Nachrüstungsanordnung des Flüssigkeitsströmungsumleiters **(100)** mit dem Fallrohr **(200)** zusätzlich durch einen Riemen **(128)** gesichert wird.

8. Verfahren **(300)** nach Anspruch 6 und 7, wobei der Flüssigkeitsauslass **(120)** einen Ausguss **(122)** einschließt.

## Revendications

1. Déviateur de flux de liquide **(100)** pour un tuyau de descente **(200),** le déviateur de flux de liquide **(100)** comprenant :
un corps **(110)** définissant un profil de canal **(112)** entre une première extrémité **(114)** et une seconde extrémité **(116),** dans lequel le profil de canal **(112)** permet l'écoulement d'un liquide dans celui-ci ; et
une sortie de liquide **(120)** adaptée pour être accouplée à la première extrémité **(114)** du corps **(110),** dans lequel la sortie de liquide **(120)** permet l'accouplement fluidique du déviateur de flux de liquide **(100)** avec le tuyau de descente **(200)** ;
la sortie de liquide **(120)** est accouplée de manière coulissante à la première extrémité **(114)** du corps **(110),** de sorte que la sortie de liquide **(120)** puisse coulisser par rapport à la première extrémité **(114)** du corps **(110)** entre une première position **(P1)** et une seconde position **(P2)** ;
dans lequel la sortie de liquide **(120)** est adaptée pour être désaccouplée fluidiquement de la première extrémité **(114)** du corps **(110)** dans la première position **(P1)** ; et
dans lequel la sortie de liquide **(120)** est adaptée pour être accouplée fluidiquement avec la première extrémité **(114)** du corps **(110)** dans la seconde position **(P2),**
dans lequel la sortie de liquide **(120)** comporte une pluralité de nervures **(124),** dans lequel la pluralité de nervures **(124)** permet d'accoupler de manière coulissante la sortie de liquide **(120)** avec la première extrémité **(114)** du corps **(110)** et vient en prise avec une pluralité de saillies **(118)** sur la première extrémité **(114)** du corps **(110),**
dans lequel
cette prise forme un accouplement inamovible entre le corps **(110)** et la sortie de liquide **(120).**

2. Déviateur de flux de liquide **(100)** selon la revendication **1,** dans lequel, dans la première position **(P1),** un écoulement du liquide à partir du tuyau de descente **(200)** est automatiquement arrêté.

3. Déviateur de flux de liquide **(100)** selon l'une quelconque des revendications précédentes, dans lequel, dans une position intermédiaire, l'écoulement du liquide à partir du tuyau de descente **(200)** est automatiquement arrêté, dans lequel la position intermédiaire est toute position de la sortie de liquide **(120)** entre la première position **(P1)** et la seconde position **(P2).**

4. Déviateur de flux de liquide **(100)** selon l'une quelconque des revendications précédentes, dans lequel la sortie de liquide **(120)** comporte un bec **(122).**

5. Déviateur de flux de liquide **(100)** selon l'une quelconque des revendications précédentes, dans lequel le profil de canal **(112)** a une forme d'hélice.

6. Procédé **(300)** pour adapter un déviateur de flux de liquide **(100)** à un tuyau de descente **(200),** le procédé **(300)** comprenant :
le perçage d'un trou **(230)** dans un tuyau de descente **(200)** ;
le maintien d'une sortie de liquide **(120)** du déviateur de flux de liquide **(100)** de sorte que la sortie de liquide **(120)** soit adaptée pour être accouplée à un corps **(110)** du déviateur de flux de liquide **(100),** dans lequel le corps **(110)** définit un profil de canal **(112)** entre une première extrémité **(114)** et une seconde extrémité **(116) ;**
l'insertion du corps **(110)** dans le tuyau de descente **(200)** par l'orifice **(230)** ;
la manipulation d'une disposition du corps **(110)** à l'intérieur du tuyau de descente **(200)** avec la sortie de liquide **(120)** de manière à ce que le corps **(110)** capture le liquide à l'intérieur du tuyau de descente **(200)** ;
la sortie de liquide **(120)** est accouplée de manière coulissante à la première extrémité **(114)** du corps **(110),** de sorte que la sortie de liquide **(120)** puisse coulisser par rapport à la première extrémité **(114)** du corps **(110)** entre une première position **(P1)** et une seconde position **(P2) ;**
dans lequel la sortie de liquide **(120)** est adaptée pour être désaccouplée fluidiquement de la première extrémité **(114)** du corps **(110)** dans la première position **(P1)** ;
dans lequel la sortie de liquide **(120)** est adaptée pour être accouplée fluidiquement avec la première extrémité **(114)** du corps **(110)** dans la seconde position **(P2)** ; et
dans lequel la sortie de liquide **(120),** lorsqu'elle est dans la seconde position **(P2),** complète l'adaptation ultérieure du déviateur de flux de liquide **(100)** avec le tuyau de descente **(200),**
dans lequel la sortie de liquide **(120)** comporte une pluralité de nervures **(124),** dans lequel la pluralité de nervures **(124)** permet d'accoupler de manière coulissante la sortie de liquide **(120)** avec la première extrémité **(114)** du corps **(110)** et vient en prise avec une pluralité de saillies **(118)** sur la première extrémité **(114)** du corps **(110),**
dans lequel
cette prise forme un accouplement inamovible entre le corps **(110)** et la sortie de liquide **(120).**

7. Procédé **(300)** selon la revendication 6, dans lequel l'adaptation ultérieure du déviateur de flux de liquide **(100)** avec le tuyau de descente **(200)** est en outre sécurisé par une courroie **(128).**

8. Procédé **(300)** selon la revendication 6 ou 7, dans lequel la sortie de liquide **(120)** comporte un bec **(122).**
